# EUROPEAN PATENT APPLICATION

(11) **EP 4 847 455 A1**
(43) Date of publication of application: **02.12.2026**
(21) Application number: 26181101.2
(22) Date of filing: 26.05.2026
(51) Int. Cl.: C02F 11/127, B08B 5/04, B08B 9/08, E03F 7/10

(54) **SYSTEM FOR EMPTYING TANKS OR DIGESTERS FOR PRODUCING BIOGAS**

(30) Priority: 29.05.2025 IT 202500012556
(71) Applicant: Corradi e Ghisolfi Srl, 26010 Corte de' Frati (CR) (IT)
(72) Inventor: CORRADI, Bruno, 26100 Cremona (CR) (IT); CORRADI, Paolo, 26010 Corte de' Frati (CR) (IT)
(74) Representative: Fezzardi, Antonio

(57) **Abstract**

A system for emptying tanks or digesters for producing biogas, characterized in that it comprises a vehicle for suction, collection, and transport of sludge and/or debris, provided with a decompressor unit (A), configured to create a negative pressure useful for the operation of a suction system for sludge and/or debris; a filtering device (B) for wet/muddy materials; a cistern (C) with openable bottom, installed by means of a lifting and tilting frame; as well as a mechanical arm (D) for moving service equipment and hoses, for the suction of said sludge and/or debris.

Said apparatuses are configured so as to improve the energy efficiency of the entire system in the suction step.

## Description

The present invention relates to the field of plants for producing biogas, which may be generated through a series of anaerobic transformations, by the digestion of sludge, sewage, and organic substances in general, or it can come from the fumes of slurry collection tanks containing fermentable material. It is known that, to regulate the production of biogas, such plants require continuous management, comprising their maintenance, remediation operations, emptying, and cleaning thereof.

Indeed, periodic emptying of the fermenters and digesters allows accurate and efficient anaerobic digestion to be achieved, which optimizes the yield thereof.

To perform such emptying, systems are known to allow suction of the material, in the absence of water, and its collection inside a cistern: this is an onerous operation, which requires stopping the plant, removing the covering sheet, and employing highly specialized personnel, capable of handling issues related to gases and fumes of the material contained in the digesters to be emptied.

Such emptying systems permit dry aspiration of debris and materials by means of suction excavators, which adapt to multiple contexts and types of use. The use of vehicles mounting equipment for collection by suction, for removal and therefore for unloading of the materials originating from biogas production plants is very widespread.

Such equipment is typically installed on such a vehicle, and is composed of three parts: a decompressor unit, provided with a coupling for the power take-off from the truck engine for operating the pump; a filtering device, usually of the sleeve type, also characterized by a compressor for expelling the dust; and a cistern with suction arm and openable bottom, useful for collection, transport and disposal of the collected materials, mounted on the frame through a mechanism that operates so as to be able to lift it, tip it and rotate it.

The operation of the suction excavator is based on the suction principle: an air stream is generated by virtue of a fan and a given negative pressure is produced. From an operational perspective, the vehicle is positioned close to the digester or the collection tank, so that the end of the tube controlled by the mechanical arm can be inserted within the plant, to initiate suction of material. Passing through the tube, the solid materials are accumulated inside the cistern, while the powders are channeled into the sleeve filters. After the collection step, the vehicle delivers the load to its destination, where the cistern is raised and tilted by means of actuators so that the material can be discharged.

However, due to the features of their parts, these suction systems have significant disadvantages. The cistern support system limits its movement, only allowing reduced inclination which, during the discharge step, renders the emptying thereof problematic, since the suctioned material has a viscosity such as to oppose flow. Furthermore, the discharge height attainable from the bottom of the cistern renders emptying thereof onto common agricultural carts impossible.

The suction arm is actuated by a very complex system, which also allows folding onto itself during road circulation, from which, however, there derives the possibility that such arm is subject to breakage due to improper uses by the operator, or also to frequent and costly maintenance interventions due to wear of the hose.

Another disadvantage of the known system is that the suction pipes run inside the chassis of the vehicle, with frequent changes of direction and section, such as to cause a considerable flow pressure drop, with consequent waste of energy.

Further, sleeve filters, which are mainly used to filter the powders present in the aggregates, and therefore perform occasional operation, also require a compressor for the expulsion of the remaining powders, which adds constructional complications to the system.

Lastly, such filters clog rapidly when used to aspirate wet or muddy materials, such as those relative to the present invention.

Within the corresponding technical field, one of the objects of the invention is to simplify such system, with particular applications to materials with semi-liquid and sludgy consistency, so as to speed up suction operations and optimize performance and consumption.

This has been achieved, according to the present invention, by providing a vehicle equipped with a decompressor unit, a filtering device for wet/muddy materials and a cistern, as well as a mechanical manipulator with articulated arms, in which such apparatuses are configured to improve the efficiency of the entire system in the suction step and to increase the maximum height reachable by the cistern and the inclination thereof in the discharge step.

A better understanding of the invention will be achieved by means of the following detailed description and with reference to the accompanying figures, which illustrate some preferred embodiments by way of non-limiting examples.

In the drawings:
Figure 1 is a side view of a system of the known type, characterized by a vehicle equipped with a suction excavator for the suction of dry materials, in the absence of water, and with a cistern in which such material is accumulated;
Figure 2 is a side view of a preferred embodiment of the invention, for the emptying of the biogas production plants;
Figure 3A is a side view of the system in Fig. 2 with the cistern in a lifting step with respect to the vehicle;
Figure 3B shows an enlarged and partially sectioned detail of Fig. 3A;
Figure 4A is a side view of the system in Fig. 2 with the cistern in a lifting step and tilted;
Figure 4B shows an enlarged and partially sectioned detail of Fig. 4A;
Figure 4C, analogous to Fig. 4A, shows the invention with the cistern tilted, without the lifting with respect to the chassis of the vehicle;
Figure 5 is a longitudinal section view of the system in Fig. 2, showing the filtering device, the cistern and the input and suction conduits of the cistern itself;
Figure 6 is a view of a detail of Fig. 5, in which the presence of a mechanical pre-filter, which protects the suction outlets, is highlighted;
Figure 7 is a top view, in partial transparency, of the system in Fig. 2;
Figure 8 shows some constructional details of the invention;
Figures 9 and 10 are further partial sectional views of the invention;
Figure 11 is a view in partial transparency of the two cyclone filtering systems;
Figure 12 shows further constructional details of the invention, in particular the position of the vacuum-breaker valves.

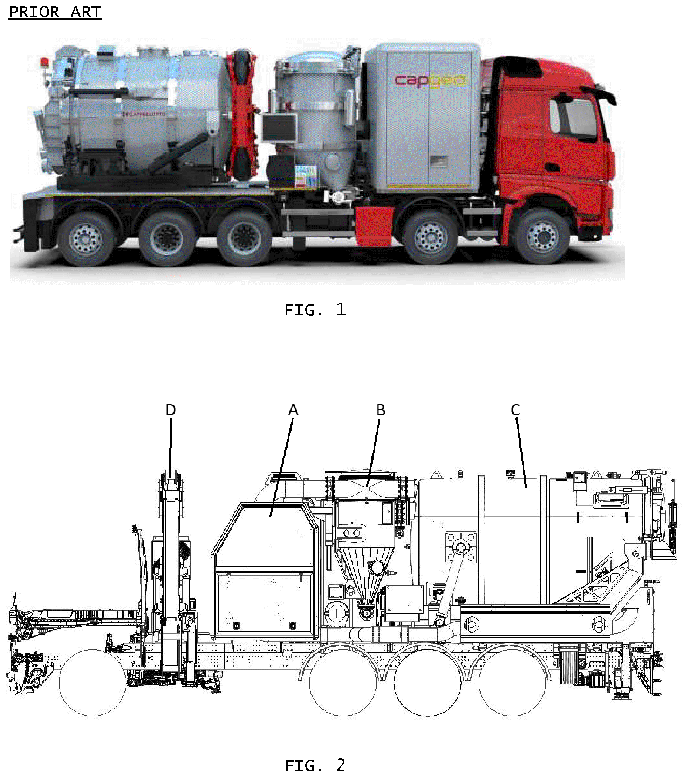

With reference to Figures 2 et seq., the object of the invention is a system for emptying the digesters and the collection tanks of a biogas production plant, by means of suction, collection, and transport of debris and materials having a semi-liquid or sludge-like consistency, with simple operations and in order to reduce energy waste.

In the embodiment described (Figure 2), purely by way of non-limiting example, such a system comprises, from left to right (i.e., from behind the driver's cab towards the rear side of the vehicle): a service mechanical arm (D), a decompressor unit (A), a filtering device (B), and a cistern (C) with an openable bottom.

These elements are installed on a vehicle which, in addition to performing the transport of the suctioned material, provides the mechanical torque to actuate the pump of the decompressor unit, as well as the oil pump to actuate the hydraulic cylinders of the arm/manipulator (D).

Such a vehicle thus comprises all the devices mentioned above, supported by its body, as well as the cistern which is moved by a mechanical structure adapted to lift it and to tip it to unload the material.

The mechanical arm, mounted directly on board the vehicle, preferably adjacent to the cab of the truck, consists of a mechanical manipulator with articulated arms.

Such an arm serves substantially for handling the service equipment and the hoses, thus the functions inherent to the purging activities, but it may also handle materials/equipment not strictly inherent to purging.

The arm is configured to position the end of the suction tube inside the biogas production plant, where it sucks in the materials, which are then conveyed - through the same pipe - into the cistern.

With such a configuration, the aspirated material no longer passes through the suction arm, but directly through a rigid steel pipe, specially shaped to minimize the path of the material that is loaded into the cistern and to replace it easily if worn.

The decompressor unit is characterized by a preferably soundproofed cabinet containing a pump actuated via a coupling that uses the drive torque produced by the engine of the vehicle on which it is mounted.

Such a decompression unit, which has the function of creating the negative pressure useful for the operation of the suction system, operates by aspirating air from the cistern of the vehicle, by means of the interposition of a filtering device operatively connected to said cistern by means of suction conduits.

In the described example, the filtering device positioned between the cistern and the decompressor unit is of the basket type with a cyclone separator and a normally closed pneumatic bottom valve: at the base of each cyclone there is a T-fitting that collects the separated particles: for the reintroduction thereof the valve is simply opened during the suction cycle and the separated material is sucked into the cistern.

Such a filtering device is characterized by a box-like body of cylindrical shape, with a tapered bottom, and is provided with a cover for extraction of the filtering cartridge. In the upper portion of such cylinder, the suction and loading pipes are provided, respectively, where the suctioned air arrives directly from the area of the openable bottom of the cistern, i.e., from the point farthest from the outlet of the loading pipe, which introduces the material into the cistern itself.

The suction pipes, from the decompressor unit go directly into the cistern, thus considerably optimizing the air flow and greatly reducing energy waste.

The aspirated air and the material conveyed therewith enter the cistern without the interposition of valves or shut-off members.

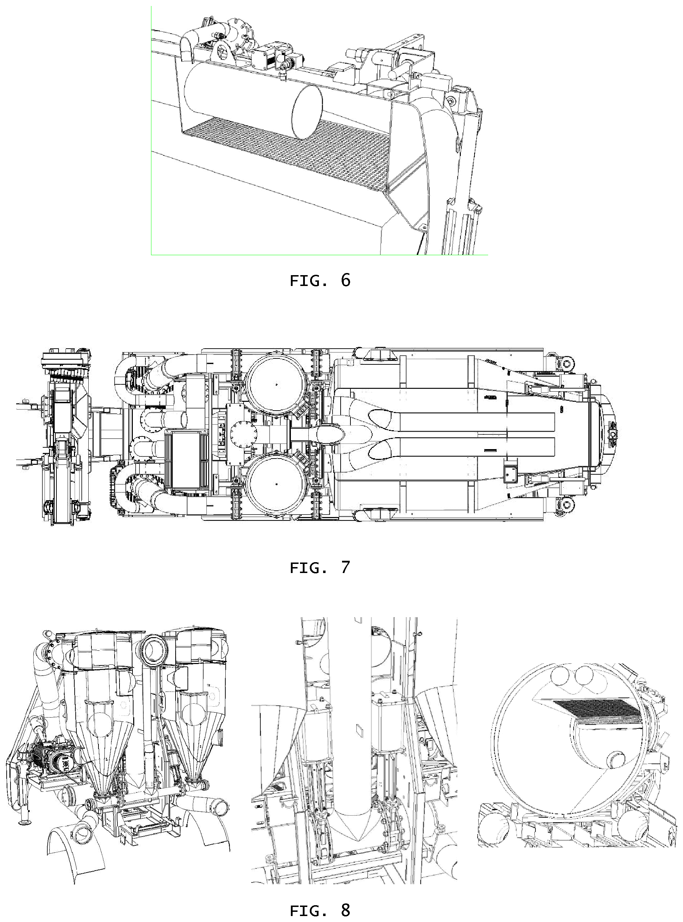

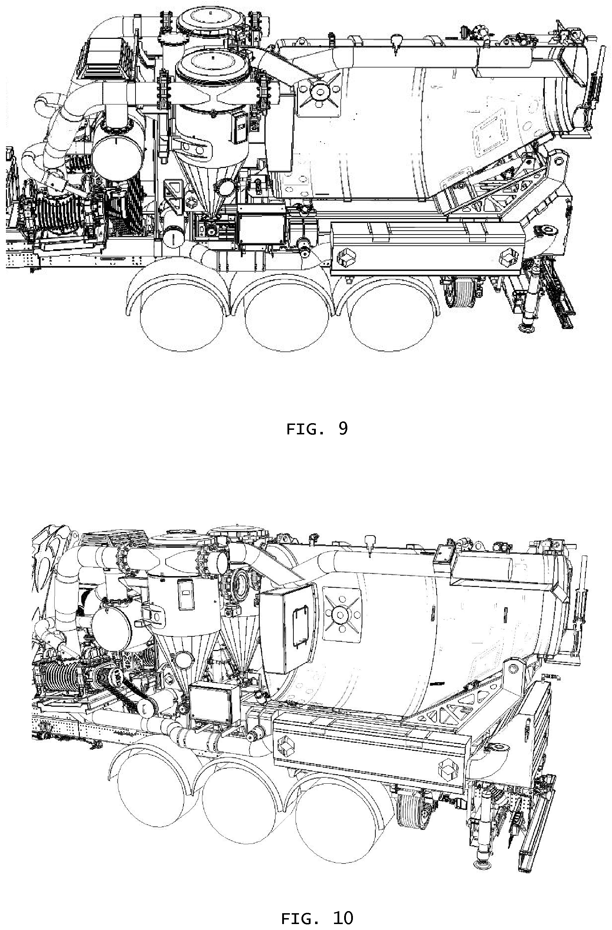

In the example described herein, the first segment of the material suction pipe is preferably made of steel and is T-shaped, to allow connection of the suction pipe on both sides of the truck - alternatively and not simultaneously - (Figures 7, 8, 9). The blade of the pneumatic valve, which remains closed, acts as a barrier for the formation of a wedge, again composed of the same aspirated material, which diverts the material towards the vertical segment.

Also, for this latter vertical segment, the same wedge-formation concept is again adopted (below the daisy flange located at the top), which allows the material to be diverted without deteriorating the steel parts of the pipe.

The second segment of the material suction pipe, which remains fastened to the cistern provides that the sealing of the pipes during suction is guaranteed by an inflatable gasket interposed at the joining point between the pipe integral with the vertical segment and the one integral with the cistern.

Advantageously, during the unloading step, it is physically impossible for the material to flow back through the loading pipe.

With reference to Figures 8-10, the suction outlets present inside the cistern are the ends of two pipes positioned on the rear side of the cistern close to the cover of the outlet opening, therefore at a location spaced apart from the deposit/input area of the material. The suction thus starts from the cistern bottom where a pre-filter is provided, passes through the cyclones and goes to the pumps.

Also in this case, inflatable gaskets are interposed between the pipes integral with the cistern and the remaining ones; further, they are protected by a mechanical pre-filter (Figure 6), which stops volatile materials, such as bags and strings, which - carried by the air flow - settle on the bottom of the cistern or accumulate in the area between the cistern and its lid.

The suctioned air is then conveyed by means of the pumps into the discharge pipes and towards silencers, and discharged on the bottom of the truck.

The pump lobes, which may reach 130/140°C, are instead cooled by means of cool air drawn in through additional pipes, which terminate in the upper part of the housing.

The air flow at the inlet to the cistern, after undergoing a first mechanical filtration of the coarser volatile material, proceeds through the two pipes to the cyclone separators, where it undergoes a second filtration: the heavier particles in suspension fall by gravity and are collected at the base of the cyclones while the lighter ones are retained by cartridge filters, placed above the cyclones.

The expulsion of the separated particulate is carried out by means of reversal of the air flow, without the need to use a dedicated compressor.

In brief, the air is initially mechanically filtered by means of the screen arranged inside the cover, with the possibility of reverse-blowing the screen itself already during the loading operation; during the unloading step, the cleaning of the screen occurs by gravity.

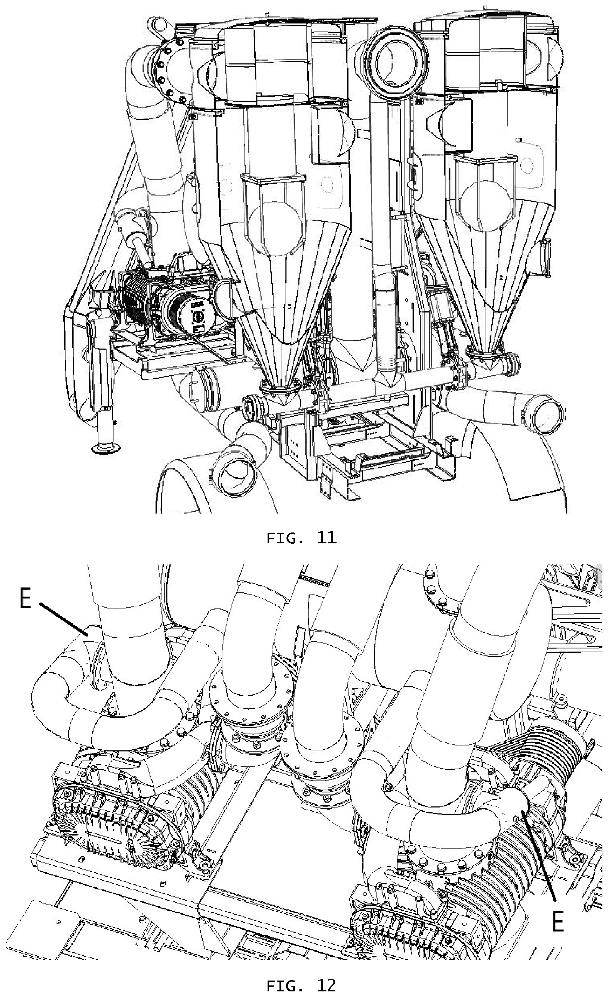

In the described preferred embodiment, each of the cyclones has a first tube 1 facing outward and a second tube 2 that communicates with the inside of the cistern. When it is necessary to perform a cleaning cycle or a suction excluding cycle in the cistern (for example, in the event of exceeding the vacuum limit value) the valves of the second tubes 2 are closed and those of the first tubes 1 are opened. As a further safeguard of the system, vacuum relief valves E (Figure 12) are also provided, which remain normally closed when the machine is operating; in the event of exceeding the maximum depression threshold, such valves open mechanically, recirculating the suction to the cooling silencer.

In other words, such vacuum relief valves E act as safety and adjustment valves in start-up transients, and as shut-off valves upon a high-level signal from the liquid/solid sensors.

In particular, these valves:
- upon high-level signals, remain in their quiescent status for 6-7 seconds, then open up and stop the machine;
- on start-up signal, remain open for 5 seconds to allow the pumps to reach speed:
- upon a high temperature signal at the discharge of the pumps (for example at 135°C), open up and bypass the suction to the silencer, until the temperature drops to 110°C (reset point).

In the described embodiment, the cistern has a cylindrical shape in the front part, while in the rear discharge part it has a shape with eccentric truncated conical sections, useful for having the height of discharge outlet at the elevated position already in the loading position.

Such a cistern is preferably made of stainless steel and has a capacity of 7.5 m³, further, at the outlet opening, it is provided with a cover having a hydraulic hermetic seal.

The cistern is mounted on a support and handling frame configured to be able to raise it in elevation and translate it rearwards, keeping it again parallel to itself.

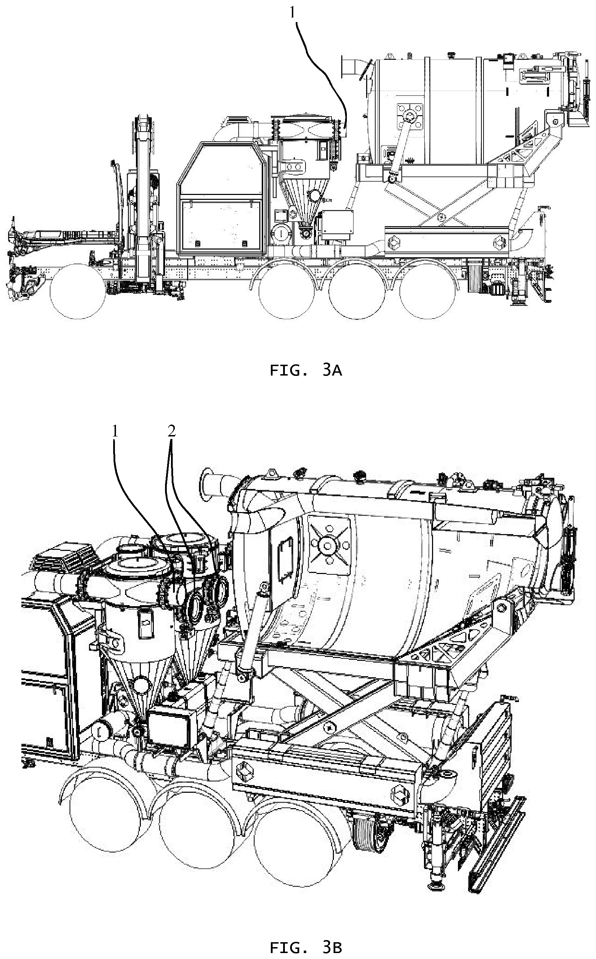

Thereby, the cistern translates upwards and rearwards (Figure 3) by the thrust of two hydraulic telescopic arms, constrained at a lower end to the body of the vehicle and at an upper end to a steel chassis supporting the cistern itself. Such a chassis, moved by the two telescopic arms is constrained by means of a deformable system such as to ensure the constant parallelism of the chassis (and thus of the cistern) with the body of the vehicle.

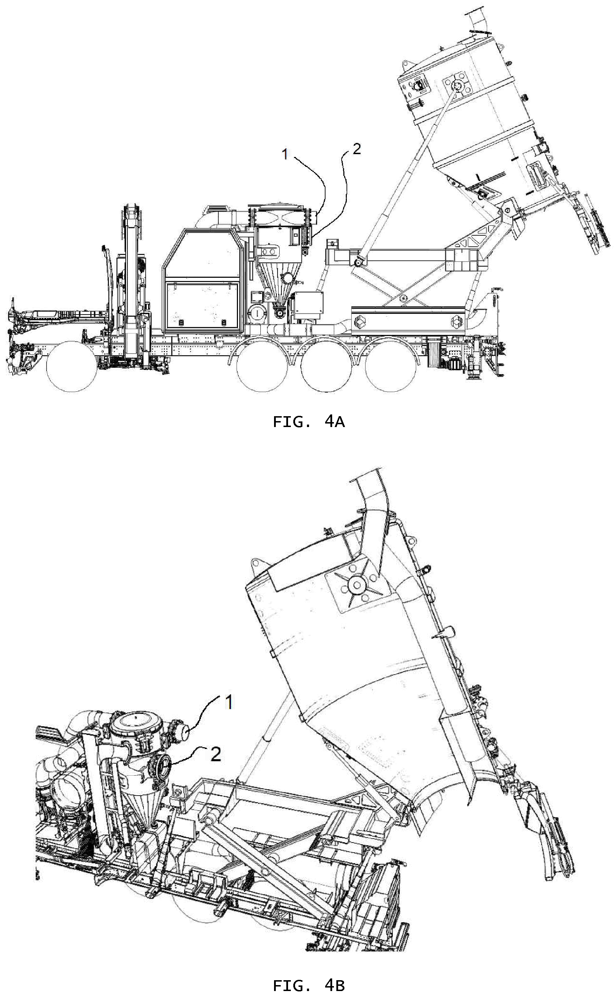

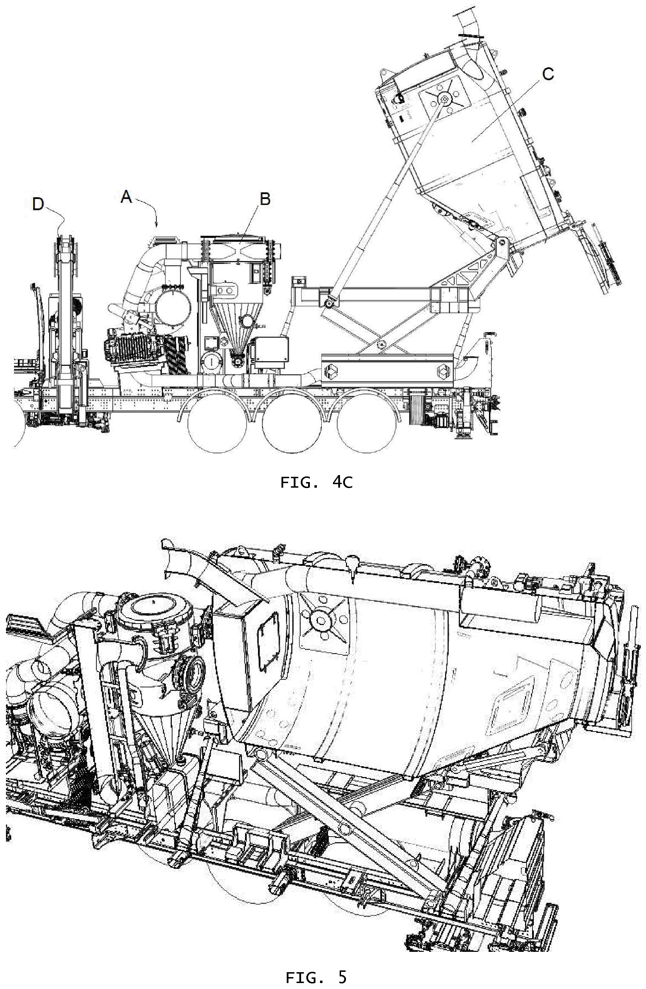

At its rear end, where the openable bottom is also located, the cistern is hinged to the rear part of said support frame so that, by means of two further telescopic arms hinged to the front part of the cistern, the latter can be rotated to achieve the overturning thereof (Fig. 4A and 4B) and to empty it. The tilting angle of the cistern in the unloading step is preferably (but not exclusively) about 66°, with a maximum value preferably (but not exclusively) of about 74°, while the maximum opening angle of the bottom is preferably 90°.

Such movements of the cistern are useful for bringing its outlet opening to a sufficiently high elevation and, at the same time, to protrude beyond the rear of the vehicle, so as to allow the material to be unloaded onto an agricultural cart or a truck with sideboards of height up to 3.3 m.

It should be noted that, according to the present invention, it is also possible to unload the cistern without raising it in elevation, keeping the support frame at the body of the vehicle.

The filtering system, in this step of emptying the cistern, remains integral with the decompressor unit and, to this end, it is each time temporarily decoupled from the cistern itself.

The inclination of the cistern body has been increased so as to facilitate the flow of the material to be unloaded.

On the horizontal bottom of the cistern, a gate valve is preferably mounted, which serves to empty the possible liquid part of the suctioned material present in the cistern, without uncontrolled spillage of liquid material.

## Claims

1. A system for emptying tanks or digesters for producing biogas, **characterized in that** it comprises a vehicle for suction, collection, and transport of sludge and/or debris, provided with:
- a decompressor unit (A), configured to create a negative pressure useful for the operation of a suction system for sludge and/or debris;
- a filtering device (B) for wet/muddy materials;
- a cistern (C) with openable bottom, installed by means of a lifting and tilting frame;
- a mechanical arm (D) for moving service equipment and hoses, for the suction of said sludge and/or debris;
wherein said apparatuses are configured so as to improve the energy efficiency of the entire system in the suction step.

2. A system according to the preceding claim, **characterized in that** said apparatuses are installed on the body of the vehicle in the following order, from front to back: a service mechanical arm (D), a decompressor unit (A), a filtering device (B), and a cistern (C) with openable bottom; wherein the suction pipes go from the decompressor unit to the filtering device and then directly into the cistern, minimizing load losses, so as to optimize the air flow and reduce energy waste.

3. A system according to claim 1, **characterized in that** said service mechanical arm substantially consists of a mechanical manipulator with articulated arms for handling the hoses during the purging activities, so that the suction of the material does not pass through the arm, but from the aforementioned hoses continues through a simple rigid pipe, specifically shaped to minimize the path of the material that is loaded into the cistern.

4. A system according to claim 1, **characterized in that** said filtering device is of the basket type with cyclone separator and normally closed pneumatic bottom valve, wherein at the base of each cyclone there is a T-fitting to collect the separated particles to be sucked into the cistern when the valve is open during the suction cycle; wherein the body of said filtering device is conical in the lower part and cylindrical in the upper part.

5. A system according to the preceding claim, **characterized in that** it is configured so that the air flow crosses an internal pre-filter within the cistern and is channeled through the suction pipes towards two centrifugal separators, present in the cyclone separator, to further screen the volatile and inert material passing through the meshes of the pre-filter, wherein the powders are suctioned by lobe pumps, while the heavier suspended particles fall by gravity into a hopper present at the base of the same cyclone separator.

6. A system according to claim 4, wherein the expulsion of the powders from the filtering device is carried out by means of air flow inversion, without the use of any compressor.

7. A system according to claim 1, **characterized in that** said cistern is made of stainless steel, it has a capacity of 7.5 m³ and a cylindrical shape in the front part, while in the rear discharge part it has a shape with eccentric truncated conical sections, useful for having the height of discharge outlet at the elevated position already in the loading position, and provided with a lid having hydraulic hermetic sealing.

8. A system according to claim 5, **characterized in that** said suction and loading pipes are configured so that the air is directly suctioned from the area close to the openable cover on the rear side of the cistern, i.e., from the point farthest from the outlet of the loading pipe, which introduces into the cistern the material suctioned from the tank or digester to be emptied.

9. A system according to the preceding claim, **characterized in that** the outlets of the suction pipes are protected by a mechanical pre-filter, arranged upstream of them and configured to stop volatile materials, such as bags and strings, which are carried by the air flow and settle on the bottom of the cistern or in the inner volume of the cistern close to its lid.

10. A system according to claim 1, **characterized in that** said lifting and tilting frame of the cistern consists of a mechanical structure adapted to lift and incline it to unload the material, so as to bring the unloading height over 3 m to enable the unloading of the material into common agricultural carts, wherein the inclination of the body of the cistern is such to facilitate the flow of the material to be unloaded.

11. A system according to the preceding claim, **characterized in that** said mechanical structure that moves the cistern is provided with means to impose the translation of the same upwards and longitudinally towards the rear side of the vehicle, exploiting the thrust of two telescopic arms inferiorly constrained to the body of the vehicle and superiorly to a steel chassis that supports the cistern itself; said chassis being further constrained to the body by means of a deformable kinematic system configured to ensure the constant parallelism of the frame with the body of the vehicle; said cistern being further posteriorly hinged to said chassis at the lower area of its rear lid, while anteriorly it is liftable with respect thereto by means of at least one further telescopic arm.

12. A system according to claim 4, **characterized in that** the first stretch of the material suction pipe is T-shaped to allow the alternate and not simultaneous connection of the suction tube on both sides of the truck.

13. A system according to the preceding claim, **characterized in that** the blade of the pneumatic valve, which remains closed and acts as a barrier for the formation of a wedge, again composed of the same suctioned material, diverts the material towards the vertical stretch without deteriorating the steel parts of the pipe.

14. A system according to claim 4, **characterized in that** each of the cyclones has a first tube (1) facing outward and a second tube (2) which is communicating with the inside of the cistern, wherein each of said first tubes (1) and said second tubes (2) is provided with a respective valve configured so that, when it is necessary to perform a cleaning cycle, or when it is necessary to perform a suction excluding cycle in the cistern, the valves of the second tubes (2) are closed and those of the first tubes (1) are opened.

15. A system according to claim 4, **characterized in that** vacuum relief valves (E) are also provided, which are usually closed when the machine is operating, and are configured to be mechanically opened in the event of exceeding the maximum depression threshold, to recirculate the suction to the cooling silencer.
